# EUROPEAN PATENT SPECIFICATION

(11) **EP 0 861 590 B1**
(45) Date of publication and mention of the grant of the patent: **15.11.2000**
(21) Application number: 97500044.9
(22) Date of filing: 28.02.1997
(51) Int. Cl.: A01K 13/00

(54) **Automatic machine for the washing and drying of animals**
Automatische Vorrichtung zum Waschen und Trocknen von Tieren
Machine automatique pour le lavage et séchage d'animaux

(43) Date of publication of application: 02.09.1998
(73) Proprietor: Leadercan, S.L., 43850 Cambrils (Tarragona) (ES)
(72) Inventor: Navalon Chicote, Vicente, 43850 Cambrils, Tarragona (ES)
(74) Representative: Manresa Val, Manuel

(56) References cited:
- EP-A- 0 673 599

## Description

The present invention pertains to an automatic machine for the washing and drying of pet animals, such as dogs and similar animals, of the type which basically comprises a cabin having an access door for the animal and being provided on the inside with a series of water and other cleaning and antiseptic liquid spray nozzles, as well as means for drying same.

Machines of this type have already been known for a long time. In fact, the same applicant filed European Patent Application No. 0673599, used to limit claim 1, which pertains to a machine according to the preamble of claim 1 and which comprises a cabin provided with entrance and exit doors for the animal, a grated floor and an inclined bottom with drain opening, as well as a pipe-based frame, which has the dual purpose of strengthening the cabin and of being used for the piping of the water and other liquids to be sprayed onto the dog. A double wall which is perforated on the inside is used to distribute the drying air. Inside the cabin, there are two columns with circular tracks, which are used to fasten the collar of the animal while it is being washed.

U.S. Patent No. 3884191 describes a machine for the washing and drying of animals, which comprises a cabin provided with means for spraying water and /or cleaning solution onto the animal to be washed, and in which is provided a floor suitable for inclining with the weight of the animal and thus facilitating the displacement of water towards the drain. The drying air is distributed by the same pipes as the water. It also has adjustable means for holding the neck of the animal.

On the other hand, U.S. Patent No. 4549502 pertains to an apparatus for washing animals, such as dogs, cats, and including livestock, which comprises a cabin in which the animal is held, sticking only its head out of same. Inside the cabin, there are a plurality of spray nozzles, as well as a plurality of adjustable brushes, with there being provided means for moving the said brushes and for carrying out the brushing of the animal and means for administering hot water and hot drying air through the same spray nozzles.

U.S. Patent No. 4505229 also pertains to an automatic machine for washing dogs and similar animals, which comprises a generally cylindrical housing formed by a flat bottom and by two outer walls, between which are arranged a series of annular and contiguous modular elements; inside, there are a series of nozzles connected to washing means and drying means, and these modular elements have a double wall, which defines an intermediate space divided between a plurality of first and second passages connected, respectively, with said washing and drying means and with the nozzles. On one of the outer walls of the machine, there is an opening, through which the animal sticks its head outwards.

In the majority of the machines mentioned, it is noted that the animal has it head outside the cabin, which means, on the one hand, that it (the head) has to be washed by hand, and on the other hand, that the animal is tied up. In the machine of European Patent Application No. 0673599, the animal remains entirely inside the cabin, but is also tied up and fastened by the collar, which causes it resulting distress. Except for U.S. Patent No. 4505229, the machines of the other patents mentioned do not provide a water saving and recirculation circuit, but the machine of the said U.S. patent only has one water tank; therefore, in spite of emptying it after the washing of the animal and refilling it with fresh water for its rinsing, fungi and other microscopic residues, which will be cast on each animal with the fresh water, may remain in the same tank.

Apart from solving all these problems, the present invention deals with an automatic machine for the washing and drying of pet animals such as dogs and similar animals, which also has other advantages and possibilities which do not exist in the prior-art machines. In fact, the machine of the present invention comprises a cabin with an entrance door for the animal to be washed and a window with an inside light for observing the course of the washing operation and the behaviour of the animal. The inside of the cabin is capable of being divided into two or three compartments for washing two or three small dogs at the same time.

The animal is washed by means of exclusive nozzles for this purpose, while the drying with hot air is carried out directly from the opening of a ventilator and the air passes through the inside of the cabin and returns to the air intake of the ventilator through a double ceiling.

The same cabin has two other compartments: one for accommodating a hose connected directly to the water supply to carry out a prewashing of the paws of the animal before it enters the cabin or to vigorously clean the floor of said cabin of any possible excrement; the other compartment accommodates bottles of cleaning, antiseptic, softening, etc. liquid with respective distributing pumps for said liquids, as well as an electric control panel. The automatic control of the machine is carried out by means of a computer with keyboard and screen. Moreover, the machine itself has a water recirculation system with two separate tanks: one for the recirculated water and the other for fresh water, so that the latter tank never comes into contact with possible fungi and other microscopic residues. Moreover, in the machine of the present invention, the animal or the animals are never tied up by the neck, but are free to move inside the cabin.

In order to facilitate the description below, two sheets of drawings are enclosed, in which:
Figure 1 shows an outer front view of the machine according to the present invention with its compartments open,
Figure 2 is another sectional front view of the same machine,
Figure 3 is an enlarged detail of the section made by the plane III-III of Figure 1,
Figure 4 is a front view of a partition wall dividing the interior of the machine, and
Figure 5 shows a diagram of the hydraulic water recirculation and renewal circuit for the operations of washing and rinsing the animals and of cleaning the machine itself.

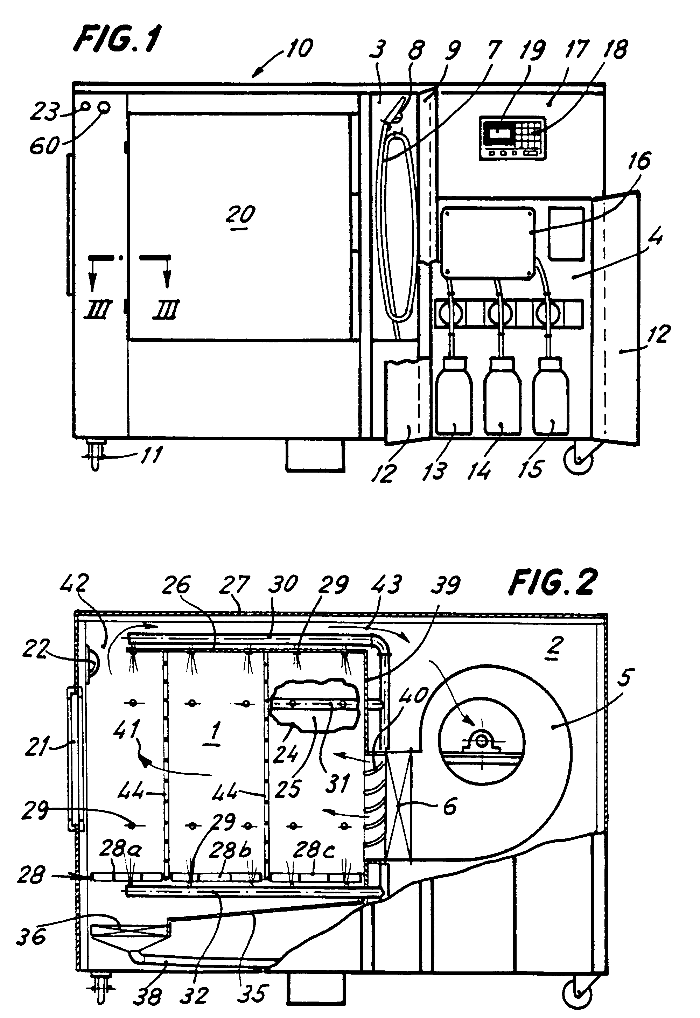

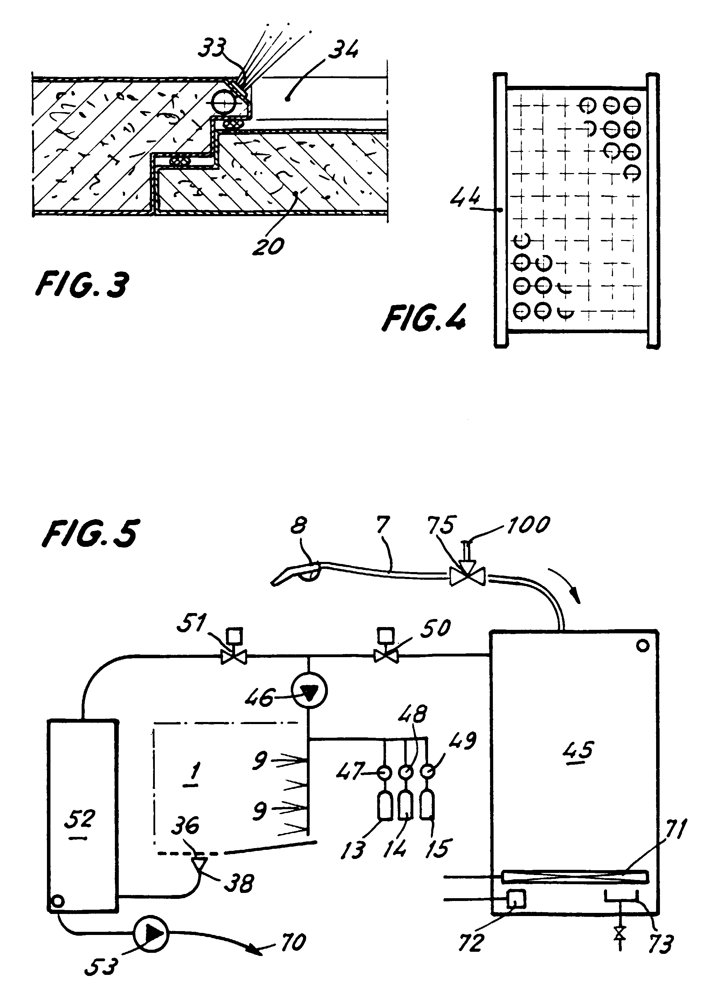

According to the drawings (Figures 1 and 2), the automatic machine for the washing and the drying of pet animals, which is the object of the present invention, comprises a general housing (10) provided with wheels (11) for its movement and divided into various compartments: a first compartment or cabin (1); a second compartment (2) that accommodates a ventilator (5) provided with air heating elements (6) as well as with various hydraulic circuit elements (schematically shown in Figure 5); a third compartment (3), which accommodates a hose (7), which is rolled up and has a nozzle (8), which can be turned off by a door (9); and a fourth compartment (4), which is also provided with doors (12), and which accommodates various bottles (13, 14, 15) of the washing, antiseptic, softening, etc. liquids and an electric control panel (16). Above this fourth compartment (4), there is a computer (17) with keyboard (18) and screen (19) to control the automatic functioning of the machine.

The cabin (1) is provided with a door (20) for the entrance and the exit of the animal to be washed and with a window (21) and an inside light (22) with a switch (23) for observing the animal while it is washed. The same cabin (1) has a double side wall (24, 25), a double ceiling (26, 27), and a grated floor (28).

The same cabin (1) is provided with a plurality of spray nozzles (29) for water and other cleaning, softening, antiseptic, etc. liquids, connected to the distribution pipe (30) passing through the double ceiling (26, 27), through the pipe (31) arranged between the double side wall (24, 25), and through the pipe (32) arranged under the grated floor (28). Nozzles (33) are likewise installed in the edges of the opening (34) of the door (20) that point towards the inside of the cabin (1) (Figure 3).

An inclined bottom (35), which leads to a filter (36) detachably installed on the opening of the drain (38), appears under the distribution pipe (32). To facilitate the cleaning or changing of said filter (36), the grated floor (28) consists of various detachable sections (28a, 28b, 28c).

On one of the walls (39) of the cabin (1), there is a grated opening (40), which communicates with the outlet of the ventilator (5) with insertion of the heating element (6). In order to provide a recirculation of the hot drying air (41) coming from the ventilator (5), the inner wall (26) of the double ceiling is interrupted, so that the double ceiling communicates on the one hand (42), with the interior of the cabin (1), and on the other hand (43), with the said compartment (2) of the ventilator (5).

There are perforated partitions (44) (Figure 4), which can be detachably anchored in the grated floor (28) and on the inner wall (26) of the said double ceiling, which partitions (44) divide the cabin (1) into two or more parts for washing, if desirable, corresponding animals at the same time.

The hydraulic circuit (Figure 5) mainly consists of: the tank (45), the pump (46), the pulsating pumps (47, 48, 49) connected to the bottles (13, 14, 15), respectively, the valves (50, 51), the tank (52), and the pump (53).

In the operation, the tank (45) is filled with water from the water supply (100), the valve (50) is open and the valve (51) is closed, the pump (46) drives the water towards the sprayers (9) together with the appropriate liquid from any of the bottles (13, 14 or 15) selected by starting the corresponding pump (47, 48 or 49) with pulsating action, then the water, either alone or mixed with any of those liquids, passes through the filter (36) and the drain (38) to the tank (52). Subsequently, the valve (50) closes and the valve (51) opens, with which a recirculation of water between the sprayers (9) and the said second tank (52) is initiated. When the washing is completed, the rinsing is started, for which the valve (50) opens again and the valve (51) closes at the exact same time as the pump starts (53); the first pump (46) continues to operate, with which fresh water is sent to the cabin (1) and the water in the tank (52) is emptied, which will stop at the sewer (70). Once the animal has been dried by means of hot air produced by the ventilator (5) and the heating element (6) and has exited the cabin (1), a washing operation similar to the above is started, i.e., with fresh water and any disinfectant in order to clean the cabin (1) before another animal to be washed enters.

This entire operation is controlled by the computer (17) by means of a suitable program, which is obviously not patentable, and by the orders given through its keyboard (18).

The first tank (45) is provided with water heating means (71), means for stabilizing the temperature of the water (72), connected with the said computer (17), and a level gauge (73).

As a complement to the hydraulic circuit described, there is the hose with an outer nozzle (8) connected to the water supply (100) by means of a valve (75) to prewash the paws of the animal before it enters the cabin (1) or to carry out a vigorous washing of the interior of said cabin and to clean it of any dirt, as was stated above.

There is an emergency switch (60) to stop the machine if necessary.

## Claims

1. Automatic machine for the washing and drying of pet animals, such as dogs, cats and similar animals, of the type which comprises a principal compartment or cabin (1) which accomodates at least one animal to be washed, having an entrance door (20) for the animal to be washed, water and liquid spray nozzles (29) for the treatment of the said animal, a grated floor (28a, 28b, 28c) on an inclined bottom (35) leading to a drain (38) and heating and drying air distributing means, the automatic machine also comprising means for heating and driving the drying air, means for electric control (16) of the machine and means for dosing the washing and treatment liquids,
characterised in that it has a general housing (10) comprising:
- said principal compartment or cabin (1) which accomodates at least one animal to be washed completely untied, so that it is free to move inside the cabin, which has an inspection window (21) with an interior light (22),
- a second compartment (2), in which are installed said means for heating and driving the drying air (6, 5), as well as a circuit for recirculating and renewing the water and treatment liquids, which comprises at least a first tank (45) for the fresh water and a second tank (52) for the recirculated water and liquids,
- a third compartment (3), having a door (9), which accommodates a hose (7) provided with a water spray nozzle (8), and
- a fourth compartment (4), which accommodates various bottles (13, 14, 15) of respective liquids for the treatment of the animal to be washed, having means for selecting one or more of said bottles, as well as elements for the said electric control (16) of the machine itself.

2. Machine in accordance with claim 1, characterized in that the mentioned inclined bottom (35) leads to a filter (36) and to a drain.

3. Machine in accordance with claim 2, characterized in that the cabin (1) comprises various perforated, vertical partitions (44), detachably installed between the ceiling (26) of the cabin and the grated floor (28a, 28b, 28c), which are capable of dividing the interior of the said cabin (1) into various sections for washing corresponding animals at the same time.

4. Machine in accordance with the above claims, characterized in that the said cabin (1) has a side wall (39) with a grated opening (40), into which run the air drive means (5) with insertion of said air heating means (6), and a double ceiling (26, 27) for the recirculation of said drying air, which communicates with the interior of the cabin at one end (42) and communicates with the second compartment (2), where the air drive means are, at the other end (43).

5. Machine in accordance with the above claims, characterized in that the spray nozzles (29, 33) are connected to respective pipes (30, 31, 32) for distributing the water and treatment liquid, passing, respectively, between the double ceiling (26, 27), through a double side wall (24, 25) opposite the entrance door, between the grated floor (28a, 28b, 28c) and the inclined bottom (35) and on the edge of the opening (34) of the said door (20).

6. Machine in accordance with the above claims, characterized in that the grated floor is divided into various separable parts (28a, 28b, 28c).

7. Machine in accordance with the above claims, characterized in that the circuit for recirculating and the renewal of water and treatment liquids comprises: said first tank (45) provided with water heating means (71), means (72) for stabilizing the temperature of same, and level detector means (73), with an inlet connected to a water supply (100) and an outlet connected, through a first valve (50), to a first pump (46); said second tank (52) for recirculating water and treatment liquids with an inlet coming from the drain (38) of the bottom of the cabin (1), a first outlet connected to the said first pump (46) through a second valve (51) and a second outlet connected to a general drain (70) through a second pump (53).

8. Machine in accordance with the above claims, characterized in that the bottles (13, 14, 15) of treatment liquids are connected to the distributing pipes through respective pumps (47, 48, 49) with pulsating function, which form the means for selecting the said bottles.

9. Machine in accordance with the above claims, characterized in that the said hose (7) is connected to a water supply (100) through a third valve (75).

10. Machine in accordance with claims 7, 8 or 9, in sofar claims 8 or 9 are dependent on claim 7, characterized in that the sequence of the operation of the said pumps, first and second valves, means for selecting the bottles, air and water drive and heating means is controlled by a computer (18, 19) installed in said housing (10) of the machine itself.

## Patentansprüche

1. Automatische Maschine zum Waschen und Trocknen von Haustieren, wie z.B. Hunden, Katzen und ähnlichen Tieren, umfassend eine Hauptkammer oder Kabine (1) zur Aufnahme mindestens eines zu waschenden Tieres mit einer Eingangstür (20) für das zu waschende Tier, Wasser und Sprühdüsen (29) für Flüssigkeiten zur Behandlung des Tieres, einen Gitterboden (28a, 28b, 28c) auf einem zu einem Abfluß (38) führenden schrägen Boden (35), sowie Mittel zur Verteilung von Heiß- und Trockenluft, wobei die automatische Maschine außerdem Mittel zum Erhitzen und Antrieb der Trockenluft, Mittel zur elektrischen Steuerung (16) der Maschine und Mittel zur Dosierung der Wasch- und Behandlungsflüssigkeiten umfaßt, dadurch gekennzeichnet, daß sie ein Hauptgehäuse (10) mit
- der Hauptkammer bzw. Kabine (1) zur Aufnahme mindestens eines in vollständig losgebundenem Zustand zu waschenden Tieres, so daß es sich in der ein Sichtfenster (21) mit Innenlicht (22) aufweisenden Kabine frei bewegen kann,
- einer zweiten Kammer (2), in der die Mittel zum Erhitzen und Antrieb der Trockenluft (6, 5) sowie ein Kreislauf zur Kreislaufführung und Erneuerung des Wassers und der Behandlungsflüssigkeiten eingebaut sind, der mindestens einen ersten Behälter (45) für das Frischwasser und einen zweiten Behälter (52) für das Kreislaufwasser und die Flüssigkeiten aufweist,
- einer dritten Kammer (3) mit einer Tür (9) zur Aufnahme eines mit einer Wassersprühdüse (8) versehenen Schlauchs (7), sowie
- einer vierten Kammer (4) zur Aufnahme verschiedener Flaschen (13, 14, 15) mit den jeweiligen Flüssigkeiten zur Behandlung des zu waschenden Tieres mit Mitteln zur Wahl einer oder mehrerer dieser Flaschen, sowie Elemente für die elektrische Steuerung (16) der Maschine selbst umfaßt.

2. Maschine nach Anspruch 1, dadurch gekennzeichnet, daß der genannte schräge Boden (35) zu einem Filter (36) und einem Abfluß führt.

3. Maschine nach Anspruch 2, dadurch gekennzeichnet, daß die Kabine (1) verschiedene, zwischen der Decke (26) der Kabine und dem Gitterboden (28a, 28b, 28 c) herausnehmbare, gelöcherte senkrechte Trennwände (44) aufweist, mit denen der Innenraum dieser Kabine (1) in verschiedene Bereiche zum gleichzeitigen Waschen der entsprechenden Tiere aufgeteilt werden kann.

4. Maschine nach den vorhergehenden Ansprüchen, dadurch gekennzeichnet, daß die Kabine (1) eine Seitenwand (39) mit einer Gitteröffnung (40), in die die Luftantriebsmittel (5) einschließlich der Lufterhitzungsmittel (6) münden, und eine doppelte Decke (26, 27) zur Kreislaufführung der Trockenluft aufweist, die mit einem Ende (42) mit dem Kabineninnenraum und mit dem anderen Ende (43) mit der zweiten Kammer (2), in der sich die Luftantriebsmittel befinden, in Verbindung stehen.

5. Maschine nach den vorhergehenden Ansprüchen, dadurch gekennzeichnet, daß die Sprühdüsen (29, 33) mit entsprechenden Rohrleitungen (30, 31, 32) zur Verteilung des Wassers und der Behandlungsflüssigkeit, die zwischen der doppelten Decke (26, 27) durch eine gegenüber der Eingangstür befindliche doppelte Seitenwand (24, 25) bzw. zwischen den Gitterböden (28a, 28b, 28c) und dem schrägen Boden (35) und an der Kante der Öffnung (34) der Tür (20) geführt werden.

6. Maschine nach den vorhergehenden Ansprüchen, dadurch gekennzeichnet, daß der Gitterboden in verschiedene trennbare Teile (28a, 28b, 28c) aufgeteilt ist.

7. Maschine nach den vorhergehenden Ansprüchen, dadurch gekennzeichnet, daß der Kreislauf zur Kreislaufführung und Erneuerung des Wassers und der Behandlungsflüssigkeiten folgendes umfaßt: den mit einem Wassererhitzungsmittel (71) versehenen ersten Behälter (45), Mittel (72) zur Stabilisierung dessen Temperatur, Mittel zur Füllstandsanzeige (73) mit einem an die Wasserzufuhr (100) angeschlossenen Eingang und einem über ein erstes Ventil (50) mit einer ersten Pumpe (46) verbunden Ausgang, und den zweiten Behälter (52) zur Kreislaufführung des Wassers und der Behandlungsflüssigkeiten mit einem vom Abfluß (38) am Kabinenboden (1) kommenden Eingang, einem ersten, über ein zweites Ventil mit der ersten Pumpe (46) verbundenen Ausgang und einem zweiten über die zweite Pumpe (53) mit einem Hauptabfluß (70) verbundenen Ausgang.

8. Maschine nach den vorhergehenden Ansprüchen, dadurch gekennzeichnet, daß die die Behandlungsflüssigkeiten enthaltenden Flaschen (13, 14, 15) mit den Verteilungsrohren über entsprechende Pumpen (47, 48, 49) mit einer Pulsierfunktion verbunden sind, die das Mittel zur Flaschenwahl darstellen.

9. Maschine nach den vorhergehenden Ansprüchen, dadurch gekennzeichnet, daß der Schlauch (7) über ein drittes Ventil (75) an die Wasserzufuhr (100) angeschlossen ist.

10. Maschine nach den Ansprüchen 7, 8 oder 9, sofern Ansprüche 8 oder 9 Unteransprüche des Anspruchs 7 sind, dadurch gekennzeichnet, daß die Arbeitsfolge der Pumpen, des ersten und zweiten Ventils, des Mittels zur Flaschenwahl, des Luft- und Wasserantriebs und der Erhitzungsmittel durch einen im Gehäuse (10) der Maschine selbst eingebauten Computer (18, 19) gesteuert wird.

## Revendications

1. Machine automatique pour laver et sécher des animaux familiers, tels que des chiens, des chats et animaux semblables, du genre comportant un compartiment ou cabine principale (1) qui héberge au moins un animal à laver, possédant une porte d'entrée (20) pour l'animal à laver, des tuyères à pulvériser l'eau et le liquide (29) pour le traitement de cet animal, un sol à grille (28a, 28b, 28c) sur une base inclinée (35) conduisant à une vidange (38) et des moyens de distribution d'air chauffant et séchant, la machine automatique comprenant également des moyens pour chauffer et entraîner l'air séchant, des moyens de contrôle électrique (16) de la machine y des moyens pour doser les liquides de lavage et de traitement,
caractérisée en ce qu'elle a un bâti général (10) comportant:
- ledit compartiment ou cabine principale (1) hébergeant au moins un animal à laver complètement détaché, de sorte qu'il est libre de se déplacer à l'intérieur de la cabine, qui possède une fenêtre d'inspection (21) et une lampe intérieure (22),
- un deuxième compartiment (2), dans lequel ces moyens pour chauffer et entraîner l'air séchant (6, 5) sont installés ainsi qu'un circuit pour recirculer et renouveler l'eau et les liquides de traitement, comprenant au moins un premier réservoir (48) pour l'eau fraîche et un deuxième réservoir (52) pour l'eau et les liquides recirculés,
- un troisième compartiment (3), ayant une porte (9), qui loge un tuyau flexible (7) pourvu de tuyère de pulvérisation d'eau (8); et
- un quatrième compartiment (4), qui loge plusieurs bouteilles (13, 14, 15) de liquides respectifs pour le traitement de l'animal à laver, ayant des moyens pour choisir une ou plusieurs de ces bouteilles, ainsi que des éléments pour ce contrôle électrique (16) de la propre machine.

2. Machine conformément à la revendication 1, caractérisée en ce que cette base inclinée (35) conduit à un filtre (36) et à une vidange.

3. Machine conformément à la revendication 2, caractérisée en ce que la cabine (1) comprend plusieurs cloisons perforées, verticales (44), montées amovibles entre le plafond (26) de la cabine et le sol à grille (28a, 28b, 28c), qui sont capables de diviser l'intérieur de cette cabine (1) en plusieurs sections pour y laver les animaux correspondants en même temps.

4. Machine conformément aux revendications précédentes, caractérisée en ce que cette cabine (1) a une cloison latérale (39) ayant une ouverture à grille (40), dans laquelle fonctionnement les moyens d'entraînement de l'air (5) où les moyens de chauffage de l'air (6) sont insérés, et un double plafond (26, 27) pour la recirculation de cet air séchant, qui communique avec l'intérieur de la cabine à une extrémité (42) et communique avec le deuxième compartiment (5), où se trouvent les moyens d'entraînement de l'air, à l'autre extrémité (43).

5. Machine conformément aux revendications précédentes, caractérisée en ce que les tuyères à pulvériser (29, 33) sont branchées aux tuyaux respectifs (30, 31, 32) pour distribuer l'eau et le liquide de traitement, passant, respectivement, entre le double plafond (26, 27), à travers une double cloison latérale (24, 25) opposée à la porte d'entrée, entre le sol à grille (28a, 28b, 28c) et la base inclinée (35) et sur le bord de l'ouverture (34) de cette porte (20).

6. Machine conformément aux revendications précédentes, caractérisée en ce que le sol à grille est divisé en plusieurs parties démontables (28a, 28b, 28c).

7. Machine conformément aux revendications précédentes caractérisée en ce que le circuit pour recirculer et renouveler l'eau et les liquides de traitement comporte: ce premier réservoir (45) pourvu de moyens de chauffage de l'eau (71), de moyens (72) pour stabiliser la température de celle-ci, et des moyens de détection de niveau (73), ayant une entrée branchée à une adduction d'eau (100), et une sortie branchée, à travers une première soupape (50), à une première pompe (46); ce deuxième réservoir (52) pour recirculer l'eau et les liquides de traitement ayant une entrée venant de la vidange (38) au fond de la cabine (1), une première sortie branchée à cette première pompe (46) à travers une deuxième soupape (51) et une deuxième sortie branchée à une vidange générale (70) à travers une deuxième pompe (53).

8. Machine conformément aux revendications précédentes, caractérisée en ce que les bouteilles (13, 14, 15) de liquides de traitement sont branchées aux tuyaux de distribution à travers les pompes respectives (47, 48, 49) avec fonction pulsatoire, formant les moyens pour choisir ces bouteilles.

9. Machine conformément aux revendications précédentes, caractérisée en ce que ce tuyau (7) est branché à une adduction d'eau (100) à travers une troisième soupape (75).

10. Machine conformément aux revendications 7, 8 ou 9, jusqu'au point où les revendications 8 ou 9 dépendent de la revendication 7 caractérisé en ce que la séquence du fonctionnement de ces pompes, première et deuxième soupapes, moyens pour choisir les bouteilles, moyens d'entraînement et de chauffage de l'air et de l'eau, est contrôlée par un ordinateur (18, 19) installé dans ce bâti (10) de la propre machine.
